# EUROPEAN PATENT APPLICATION

(11) **EP 4 749 349 A1**
(43) Date of publication of application: **27.05.2026**
(21) Application number: 24214933.4
(22) Date of filing: 22.11.2024
(51) Int. Cl.: G02B 27/01

(54) **HEAD UP DISPLAY DEVICE**

(71) Applicant: Valeo Comfort and Driving Assistance, 94000 Créteil (FR)
(72) Inventor: BEN-NACHOUANE, Ayoub, 94000 Créteil (FR); PARSA, Srilekha, 94000 Créteil (FR)
(74) Representative: Delplanque, Arnaud

(57) **Abstract**

The invention relates to a head up display device comprising a housing (6), and, inside the housing, an picture generation unit (2) configured to generate a light beam (3), a folding mirror (9) attached to a first region (13) of an inner surface of the housing and configured to reflect the light beam, wherein the head-up display (1) comprises a spacer structure (16) extending above a second region (18) of an outer surface of the housing, the first region and the second region (19) forming two opposite side of a same portion of a wall of the housing, the spacer structure (16) being fixed to at least a portion of the housing.

## Description

### TECHNICAL FIELD OF THE INVENTION

The invention relates to the field of display devices for automotive vehicles, and more precisely to the thermal management in such devices.

More precisely the invention relates to a head-up display device.

### BACKGROUND INFORMATION AND PRIOR ART

A head-up display device (hereafter "head-up display") is an optical system for projecting an image into the field of view of a driver of a vehicle, for example to enable him to access certain information relating to the driving or to the status of the vehicle (speed, GPS indications, etc.) without having to look away from the road. Typically, a head-up display comprises a picture generation unit (PGU) and an optical system for transmitting the image generated by the picture generation unit to a partially reflective (i.e. partially reflective and partially transparent) plate, e.g. the vehicle windshield (or windscreen) or a partially reflective plate separated from the windshield and dedicated to the display (known as a "combiner").

Some head-up displays enable the display of augmented reality images, i.e. images that appear, from the driver's point of view, to be integrated into the vehicle's environment. For example, arrows can be virtually projected onto the road (i.e. they appear, from the driver's point of view, to be projected onto the road) at a distance of a few meters from the vehicle. Also, obstacles or traffic signs can be virtually highlighted.

The virtual image (as perceived by the driver) displayed by an augmented reality head-up display has several characteristics. It is inclined at least 30° to the road or is parallel to the road, it has a luminance of at least 1000 cd.m², a contrast of at least 1500:1, and a width of at least 1 meter. Its brightness must be uniform.

Consequently, a head-up display suitable for providing a virtual image in augmented reality must include a picture generation unit capable of providing very high optical power, which generates very high heat, and an optical system that has a magnification factor of at least 20. Such an optical system, when subjected to solar radiation (which arrives in the opposite direction to the light beam generated by the display), risks strongly to magnify the sun's rays and increase the temperature of the head-up display.

In particular, the housing of the head-up display may reach temperatures as high as 135°C. Such temperatures may damage elements that are in the direct environment of the head-up display, for instance electric wires that run along the housing of the head-up display.

### SUMMARY OF THE INVENTION

Therefore, one object of the invention is to provide a solution to preserve the elements that are directly in the environment of the housing of the head-up display.

According to an aspect of the invention, it is provided a head up display device comprising a housing and, inside the housing, a picture generation unit configured to generate a light beam, a folding mirror attached to (for instance, in contact with) a first region of an inner surface of the housing and configured to reflect the light beam, wherein the head-up display comprises a spacer structure extending above a second region of an outer surface of the housing, the first region and the second region forming two opposite side of a same portion of a wall of the housing, the spacer structure being fixed to at least a portion of the housing.

The spacer structure advantageously keeps any element in the vicinity of the second region at a minimal distance from the second region. Therefore, even if the temperature of the housing in the second region increases strongly, the elements in contact with the spacer structure will not be damaged.

According to an embodiment, the spacer structure comprises a box-shaped structure that comprises side walls extending from the outer surface and defining the perimeter of the second region, and a distal wall extending facing the second region, extending from the side walls and at distance from the outer surface, said distal wall comprising at least a through opening.

According to an embodiment, the distal wall is a lattice wall.

According to an embodiment, the distal wall comprises a plurality of substantially parallel slots (i.e. parallel or extending according to directions forming with the extension directions of the adjacent slots an angle lower than 5°).

According to an embodiment, the spacer structure has a height measured orthogonally to the outer surface of the housing at least equal to two centimeters (corresponding to the orthogonal distance between the outer surface and the distal wall).

According to an embodiment, a thermal insulation foam is placed in contact with the outer surface in the second region.

According to an embodiment, the material of the spacer structure is adapted to resist to temperatures below or equal to 130°C under a pressure of 1.8 MPa without deforming. In other words, the deflection temperature of the material of the spacer structure is at least 130°C under a load of 1.8 MPa.

According to an embodiment, the spacer structure is made of polycarbonate.

According to an embodiment, the spacer structure is fixed to the housing, for instance by clipping or using screws.

### DETAILED DESCRIPTION OF EXAMPLE(S)

The following description with reference to the accompanying drawings will make it clear what the invention consists of and how it can be achieved. The invention is not limited to the embodiment illustrated in the drawings. Accordingly, it should be understood that where features mentioned in the claims are followed by reference signs, such signs are included solely for the purpose of enhancing the intelligibility of the claims and are in no way limiting on the scope of the claims.
- Figure 1 is a schematic view of a head-up display according to an embodiment of the invention;
- Figure 2 is a schematic view of a head-up display according to another embodiment of the invention.

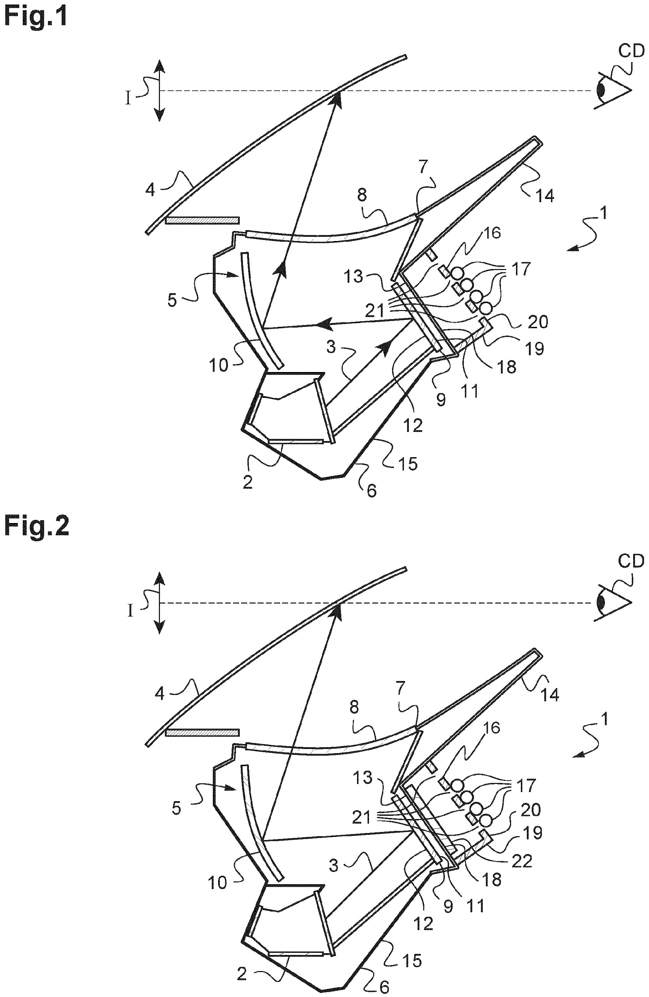

A head-up display according to an embodiment of the invention, as shown schematically in figure 1 and designated as a whole by the numerical reference 1, is configured to generate and display an augmented reality image I in the field of view of a driver CD of a motor vehicle, for example a car.

To this end, the head-up display 1 comprises a picture generation unit 2 configured to generate a light beam 3 corresponding to the image to be displayed, a partially transparent plate 4, for example a windshield of the vehicle, and an optical system 5 configured to reflect the light beam 3 towards the partially transparent plate 4. The picture generation unit 2 and the optical system are enclosed in a housing 6 made in an opaque material. The housing 6 comprises an exit opening 7 through which the light beam 3 may exits the housing 6. Here, the exit opening is physically closed by a transparent cover window 8.

The optical system 5 is here a magnifying optical system configured to reflect and magnify the image provided by the picture generation unit 2. To this end, it comprises a first mirror, generally called a folding mirror, and a second mirror 10.

The folding mirror 9 is configured to receive the light beam 3 from the image generating device 2 on its reflective face and reflect it toward the second mirror 10. Here, the folding mirror 9 is a planar mirror comprising a non-reflective face 11 and a reflective face 12 opposite to the non-reflective face 11. In this example, the folding mirror 9 is attached to an inner surface of the housing 6. For instance, the non-reflective face 11 is facing the inner surface and comprise fixation means configured to fix the folding mirror 9 to the inner surface, for instance an adhesive material, screws, or a clipping system. The folding mirror 9 may be placed in contact with the inner surface, or a space (a volume of air) may be left between the folding mirror 9 and the inner surface.

A first region 13 is here defined on the inner surface of the housing 6 and corresponds to the region of the inner surface which is in vis-a-vis of the non-reflective face 11 of the folding mirror 9. For instance, the first region 13 is an orthogonal projection of the first face on the inner surface of the housing 6. On the outer wall of the housing 6 is defined a second region 18, the outline of which corresponds to the outline of the first region 13. In other words, the first region 13 and the second region 18 form two opposite sides (or faces) of a same portion of the wall of the housing 6.

In this example, the second mirror 10 is a concave mirror and is configured to reflect and focus the light beam 3 (reflected by the folding mirror 9) toward the windshield 4 of the vehicle through the exit opening 7.

In this embodiment, the housing 6 comprises two distinct portions. A first portion 14, or upper portion, comprises the exit opening 7 and the first region 13. A second portion 15, or lower portion, encloses the picture generation unit 2. The second mirror 10 is here attached to an inner surface of the second portion 15. For instance, the first portion 14 and the second portion 15 are attached together by clipping.

Because of the high optical power provided by the picture generation unit 2, and because of the possible presence of sun rays that are incident onto the optical system in a direction opposite to the light beam 3, the temperature of the head-up display 1 may increase. Specifically, the folding mirror 9 may absorb some of the optical power, and then transfer the accumulated heat to the wall of the housing 6, here to the wall of the first portion 14.

In order to avoid damage to any element which would be too close from the housing, in particular too close to the second region 18, the head-up display 1 comprises a spacer structure 16, in particular here a structure configured to keep any object in the vicinity of the head up display 1 at distance from the second region 18. In this embodiment, the spacer structure is configured to keep an element external to the head-up display, such as a plurality of wires 17, away from the second region. For instance, the spacer structure is made in a material having a thermal conductivity lower than 0.3 W.m⁻¹.K⁻¹, for instance a polymer material, here polycarbonate. For instance, the polycarbonate "*Makrolon*^{®} *2205*", from the company "*Covestro Deutschland AG*" is a suitable material. Here, the spacer structure 16 is reinforced with fiber glass.

In this particular embodiment, the spacer structure 16 is fixed to the housing 6 by fixation means, for instance here clipped to the housing 6. Thus, the spacer structure 16 and the housing 6 comprise both corresponding and cooperating clipping means.

Here, the spacer structure 16 is fixed to the housing so as to establish a contact with the housing. The contact areas between the spacer structure 16 and the housing are located on the outline of the second region 18.

Here, the spacer structure 16 has a minimal dimension measured orthogonally to the outer surface in the second region (when fixed to the housing 6) comprised between one centimeter and five centimeters. For instance, in this example, the minimal dimension is equal to two centimeters. Here, each of the walls has a minimal dimension measured orthogonally to the outer surface equal to two centimeters. Consequently, the wires 17 that pass above the second region are at least at a distance of two centimeters from the outer surface.

Here, the spacer structure 16 comprises a side wall 19, a first edge of which being configured to be fixed on the outer surface, in particular here on the outline of the second region 18. When fixed to the housing 6, the side wall 19 is orthogonal to the outer surface. A second edge of the side wall, opposite to the first edge, is connected to a distal wall 20 of the spacer structure 16. The distal wall 20 is configured to, when the spacer structure is fixed to the housing, be substantially parallel to the outer surface in the second area 18. In this embodiment, the height of the side wall (the dimension from one edge to the other) is equal to the minimum distance and therefore the distal wall extends at the minimal distance from the outer surface. Therefore, when fixed to the housing 6, the spacer structure 16 forms a box defining a free space above the second region 18.

In this embodiment, the spacer structure 16 is configured to permit an evacuation of the heat from the housing 6. To this end, the distal wall 20 comprises at least a through opening 21. For instance, the distal wall 20 comprises a plurality of through openings 21. For instance, the through openings 21 are substantially parallel slots that extends from one edge of the distal wall to an opposite edge of the distal wall 20, conferring to the spacer structure 16 a cage-like appearance. Thanks to the through openings 21, the heat is not confined in the spacer structure 16.

The invention is not limited to the embodiment described above in connection to figure 1.

For instance, it has been described a spacer structure comprising a distant wall comprising a plurality of slots. The invention is not limited to this example, and other embodiment comprise a spacer structure comprising through openings having different shapes and/or through openings in the side wall. For instance, the distant wall may present a lattice structure. Other embodiments comprise a spacer structure without through opening.

It has been described a spacer structure comprising a side wall configured to be orthogonal to the outer surface. Other embodiments comprise a spacer structure in which the side wall form an angle with the outer surface.

The invention is not limited to a spacer structure and a first portion of the housing made with polycarbonate, but is compatible with any material, preferably material that can resist to high temperatures, for instance temperatures as high as 150°C.

It has been described a spacer structure comprising through openings that permit to evacuate the heat. In other embodiments of the invention, as the one illustrated on figure 2, a thermal insulation foam 22 may be applied on the outer surface of the housing 6, for instance so as to cover all the outer surface in the second region 18, in order to prevent or limit the heat transfer.

The head-up display described above is intended to be used in a car, but the invention is not limited to this example and the head-up display according to the invention may be used in any automotive vehicles, for instance trucks, buses, planes, helicopters, or boats.

It has been described a folding mirror attached to the inner surface of the housing with fixation means being an adhesive material, screws or a clipping system. In other embodiments, the mirror is glued on the inner surface and an air gap is maintained between the folding mirror and the housing. In other embodiments, a soft material, for instance foam, is placed between the folding mirror and the housing to avoid a rigid mechanical contact with the housing material.

In an alternative embodiment of the invention, the spacer structure is being overmolded on at least a portion of the housing, instead of being fixed to at least a thereof. The overmolding process may involve a different material that the one use for the housing, said different material a material having a thermal conductivity lower than 0.3 W.m⁻¹.K⁻¹.

## Claims

1. Head up display device comprising a housing (6) and, inside the housing (6), a picture generation unit (2) configured to generate a light beam (3), a folding mirror (9) attached to a first region (13) of an inner surface of the housing (6) and configured to reflect the light beam (3), wherein the head-up display (1) comprises a spacer structure (16) extending above a second region (18) of an outer surface of the housing (6), the first region (13) and the second region (19) forming two opposite side of a same portion of a wall of the housing (6), the spacer structure (16) being fixed to at least a portion of the housing (6).

2. Head up display according to claim 1, wherein the spacer structure (16) comprises a box-shaped structure that comprises side wall (19) extending from the outer surface and defining the perimeter of the second region (18), and a distal wall (20) facing the second region, extending from the side wall (19) and at distance from the outer surface, said distal wall (20) comprising at least a through opening (21).

3. Head up display according to claim 1 or 2, wherein the distal wall (20) is a lattice wall.

4. Head up display according to any one of claim 1 to 3, wherein the distal wall (20) comprises a plurality of substantially parallel slots.

5. Head up display according to any one of claims 1 to 4, wherein the spacer structure (16) has a height measured orthogonally to the outer surface of the housing (6) at least equal to two centimeters.

6. Head-up display according to any one of claims 1 to 5, wherein a thermal insulation foam (22) is placed in contact with the outer surface in the second region (18).

7. Head-up display according to any one of claims 1 to 6, wherein the material of the spacer structure (16) is adapted to resist to temperatures below or equal to 130°C under a pressure of 1.8 MPa without deforming.

8. Head-up display according to any one of claims 1 to 7, wherein the spacer structure (16) is made of polycarbonate.

9. Head up display according to any one of claims 1 to 8, wherein the spacer structure (16) is fixed to the housing (6) by clipping.
